# FASCICULE DE BREVET EUROPEEN

(11) **EP 0 687 653 B1**
(45) Date de publication et mention de la délivrance du brevet: **15.09.1999**
(21) Numéro de dépôt: 95401427.0
(22) Date de dépôt: 16.06.1995
(51) Int. Cl.: C02F 3/30, C02F 3/32, C02F 3/18

(54) **Procédé et installation de traitement des matières de vidange domestiques**
Verfahren und Anlage zur Aufbereitung von Abfall aus Senkgruben
Process and installation for the treatment of waste material from cesspools

(30) Priorité: 16.06.1994 FR 9407396
(43) Date de publication de la demande: 20.12.1995
(73) Titulaire: EPARCO, F-75009 Paris (FR); CEREMHER, F-34140 Mèze (FR)
(72) Inventeur: Bondon, Daniel, F-34000 Montpellier (FR); Crabos, Jean-Louis, F-34140 Mèze (FR); Sambucco, Jean-Pierre, F-34140 Mèze (FR); Pietrasanta, Yves, F-34140 Mèze (FR); Philip, Hervé, F-34570 Pignan (FR); Maunoir, Siegfried, F-34000 Montpellier (FR)
(74) Mandataire: Derambure, Christian

(56) Documents cités:
- EP-A- 0 240 412
- WO-A-95/07862
- DE-A- 2 136 871
- DE-A- 3 028 039
- DE-A- 3 226 797
- US-A- 3 839 198
- DE INGENIEUR, vol.103, no.6/7, Juin 1991, DEN HAAG NL pages 15 - 18 D. KUIPER 'DE TECHNOLOGISCHE PERSPECTIEVEN VAN ALGEN'

## Description

L'invention concerne une installation de traitement des matières de vidange domestiques par voie biologique. Elle concerne également son utilisation pour le traitement des matières de vidange domestiques. Plus particulièrement, l'invention concerne le traitement des matières de vidange domestiques issue principalement de fosses septiques, de fosses étanches, et de bacs dégraisseurs.

La production annuelle de matières de vidange domestiques en France est estimé à 11 millions de tonnes (Ministère de l'Environnement, Cahier Technique DPP n°17-1985).

La mise en place des schémas départementaux d'élimination des matières de vidange prévue par la loi dès 1978 n'est réalisée que dans de rares cas. Les raisons de cet état de fait sont multiples, mais la principale est le manque de procédés de traitement disponibles.

Ainsi, le devenir de ces déchets liquides bruts, assimilés depuis peu aux déchets ménagers (1993), n'est pas maîtrisé, ce qui se traduit par des rejets mal contrôlés, soit de dans des stations d'épuration non dimensionnées à cet effet, soit même directement dans le milieu naturel.

Cette situation n'est pas acceptable car elle peut se traduire par des dysfonctionnements au niveau des ouvrages d'épurations communaux et peut conduire à des problèmes d'environnement et de santé publique. De l'état technique, on connait un certain nombre de procédés et/ou d'installations d'épuration des eaux usées ou équivalents :

Ainsi, le document FR-A-2 637 583 concerne un procédé et une installation d'épuration des eaux usées. L'installation d'épuration comporte un conteneur à chambres qui est subdivisé, par des cloisons, en différentes sections pour l'épuration préliminaire, le traitement biologique ou chimique, l'épuration intermédiaire et/ou finale des eaux usées. Chaque section comporte plusieurs chambres qui peuvent être reliées entre elles dans un ordre quelconque à sélectionner en fonction de la quantité et la nature des eaux usées à traiter.

L'installation comporte également au moins un dispositif dans la zone de l'épuration préliminaire, de l'épuration intermédiaire et l'épuration finale, destiné à éliminer les boues d'épuration qui s'y sont déposées.

Ainsi, dans un fonctionnement en deux étapes ou plus, les différentes étapes de traitement sont elles-mêmes subdivisées, de sorte que les eaux usées passent deux fois ou plus par l'étape de traitement biologique et sont entre-temps soumises à une nouvelle épuration intermédiaire.

Le document FR-A-2 590 246 concerne un dispositif d'oxygénation des effluents de lagunage naturel, notamment pour ouvrage de prétraitements ou de passage entre bassins de stabilisation. L'ouvrage doit comprendre un conduit d'arrivée des effluents, un conduit de sortie des effluents et une vanne de réglage du niveau des effluents en amont. Ce dispositif comporte un appareil insufflant de l'air dans le conduit de sortie des effluents.

Ce document concerne le domaine des lagunages mais il ne met pas en évidence l'association en parallèle du lagunage avec un système de décantation-digestion.

Le document FR-A-2 585 696 concerne un appareil pour le traitement d'eaux résiduaires par des micro-organismes anaérobie fixés sur des supports. Ce dispositif comporte une enceinte verticale fermée comportant un axe central tournant, munie à sa base de moyens pour l'entrée de l'eau résiduaire à traiter, à sa partie supérieure, de moyens pour la sortie de l'eau traitée et l'évacuation du gaz de fermentation produit.

Cette enceinte comporte en outre une superposition de supports des micro-organismes anaérobies, les uns animés d'un mouvement de rotation, les autres fixes.

Cet appareil peut être relié à une ou plusieurs fosses septiques permettant ainsi d'éliminer tout risque de colmatage et de minimiser la production de boues tout en atteignant des rendements d'épuration importantes. Là encore, on est en présence de la mise en série d'une fosse septique avec un appareil d'épuration. D'autre part, cette épuration est anaérobie et non pas aérobie.

Le document EP-A-0 474 296 concerne un appareil pour la purification des eaux usées. Cet appareil comporte un réservoir comprenant un système primaire de circulation du liquide, une sortie et une entrée d'effluents, reliées au réservoir, un dispositif de propulsion pour faire circuler le liquide dans le système de circulation et simultanément l'aérer. Le réservoir est en outre muni d'un espace de dénitrification relié au reste du réservoir par une entrée et une sortie. L'entrée d'effluents est connectée à l'espace de dénitrification.

Un système de circulation secondaire est en outre formé dans cet espace de denitrification et comporte son propre dispositif de propulsion.

Le document DE-A-2 136 871 concerne une station d'épuration biologique compacte à traitement aérobie comportant deux étages.

Elle est constituée d'un réservoir ouvert vers le haut comportant dans sa zone supérieure une chambre de clarification préliminaire ou de pré-accumulation et, dans sa partie inférieure, une chambre de digestion des boues. La station comprend également une chambre d'accumulation intérieure et une chambre de clarification finale centrale, les chambres étant en liaison les unes avec les autres hydrostatiquement par l'intermédiaire d'ouvertures qui sont suffisamment grandes pour permettre un écoulement des eaux usées.

Le document DE-A-3 028 039 concerne une installation d'épuration des eaux d'égouts comportant une fosse d'oxydation à la suite d'une chambre de digestion. La fosse d'oxydation se trouve au-dessus de la chambre.

Aucun de ces deux derniers documents ne met en jeu une croissance algale et ne divulgue une mise en parallèle de la décantation/digestion avec le bassin d'oxydation mais au contraire ces deux documents divulguent une décantation préalable pour séparer les boues de l'effluent.

L'invention a donc pour objet une installation de traitement des matières de vidange domestiques par voie biologique qui pallie les inconvénients rencontrés par celles décrites dans l'état de la technique. En particulier, l'invention a pour objet une telle installation susceptible de servir d'unité de traitement de proximité, d'être peu onéreuse et facilement gérable.

Un autre objet de la présente invention est une telle installation qui permette le rejet d'un effluent ayant des caractéristiques physico-chimiques et microbiologiques voisines de celles d'une eau usée domestique et donc traitable par les stations d'épuration collectives conventionnelles. Le rejet des effluents traités pourra se faire dans les plages horaires creuses (en terme de charge polluante admise dans les stations d'épuration classique), la nuit, par exemple.

Un autre objet de la présente invention est une telle installation dont la mise en oeuvre permet d'éviter la sédimentation dans le bassin de lagunage haut rendement.

Un autre objet de la présente invention est une telle installation qui permette de déconcentrer en permanence le bassin de lagunage haut rendement en matière solide.

Un autre objet de la présente invention est une telle installation dont la mise en oeuvre permet une élimination et non un transfert de la pollution, les MES (matières en suspension) dans l'effluent de sortie étant essentiellement de la biomasse algale, les taux d'épuration obtenus permettant donc un rejet tout à fait comptatible avec un traitement en station d'épuration collective classique.

Un autre objet de la présente invention est une telle installation qui ne nécessite pas de procédés de pré-traitement, des ajouts de réactifs, une aération artificielle.

A cet effet, l'invention concerne une installation de traitement des matières de vidange domestiques par voie biologique, caractérisée en ce qu'elle comprend :
- au moins une fosse septique (1) de décantation-digestion destinée à éliminer la majeure partie des matières solides, la fosse septique (1) ayant un volume de 30 m³ pour un traitement de 1 m³/jour de matières de vidange domestiques ;
- au moins un bassin de lagunage haut rendement (2).

Les dits fosse septique (1) et bassin de lagunage haut rendement (2) étant en parallèle de manière à ce que les matières brutes en suspension dans le bassin de lagunage haut rendement soient décantées et digérées dans la fosse septique et que le surnageant de la fosse septique soit rejeté dans le bassin de lagunage, la surface au bassin de lagunage haut rendement (2) étant comprise entre 100 et 500 m² pour un traitement de 1 m³/jour de matières de vidange domestiques.

L'installation de traitement des matières de vidange domestique par voie biologique selon l'invention comprend également les caractéristiques suivantes, prises seules, en option ou en combinaison : le bassin de lagunage haut rendement comprend au moins un moyen d'amélioration de la croissance algale ; le moyen d'amélioration de la croissance algale comprend un moyen pour créer et maintenir un certain courant dans le bassin de lagunage haut rendement ; l'installation comprend, en amont du bassin de lagunage haut rendement, au moins un réservoir de stockage destiné à recevoir les matières de vidanges issues de camions hydrocureurs ; l'installation comprend en outre, en aval de la fosse septique de décantation-digestion, un lit de séchage.

L'invention concerne également l'utilisation d'une installation de traitement des matières de vidange domestiques par voie biologique, conforme à l'invention, pour le traitement des matières de vidange domestiques.

Les autres caractéristiques et avantages de la présente invention seront bien compris à la lecture de la description qui suit en référence au dessin annexé dans lesquels :

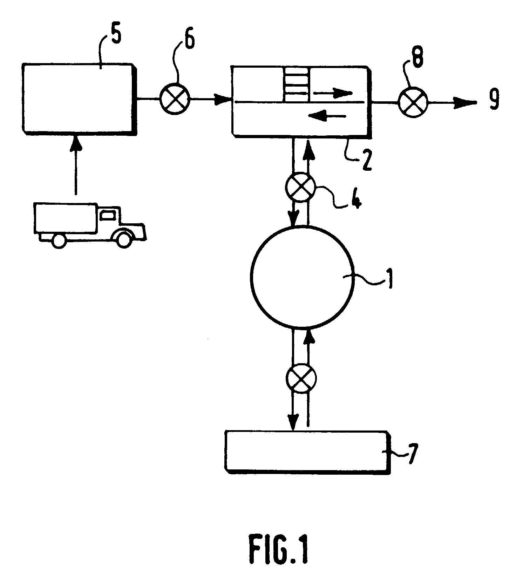

- la figure 1 représente un schéma de principe d'une installation de traitement de matières de vidange conforme à la présente invention, telle qu'elle pourrait être installée et exploitée ;
- la figure 2 est une vue schématique d'une installation expérimentale conforme à la présente invention, celle-ci comprenant en outre un bassin de lagunage au rendement servant de témoin ;
- les figures 3 à 15 sont des graphes illustrant l'évolution des paramètres physico-chimiques mesurés lors de la mise en oeuvre de l'installation de la figure 2 (température, pH, teneur en chlorophylle a, phéo-pigments, oxygène dissous, demande chimique en oxygène totale, demande chimique en oxygène soluble, matières en suspension, teneur en azote total, teneur en azote total soluble, teneur en azote ammoniacal, phosphore total, phosphates en fonction du temps.

L'invention concerne donc une installation de traitement des matières de vidanges domestiques par voie biologique. Selon l'invention, une telle installation comprend :
- au moins une fosse septique 1 de décantation-digestion destinée à éliminer la majeure partie des matières solides ;
- au moins un bassin de lagunage haut rendement 2.

Le procédé de lagunage haut rendement est en soi bien connu puisqu'il est utilisé aux Etats-Unis depuis les années 1960 et qu'il a été largement étudié et décrit en France également.

Le procédé de décantation-digestion dans un réacteur ou une fosse septique est également bien connu de l'homme du métier.

Selon une caractéristique importante de la présente invention, la fosse septique 1 utilisée en tant que décanteur-digesteur est mise en parallèle avec le bassin de lagunage haut rendement 2 et non pas en série comme cela se fait classiquement.

En effet, dans une station d'épuration classique, on trouve dans un premier temps un procédé de décantation-digestion visant à éliminer la plus grande partie des matières solides, procédé qui en général est suivi par un procédé aérobie, par exemple un lagunage haut rendement.

Or, dans le cas des matières de vidange, celles-ci sont déjà les résidus d'un traitement par procédé de décantation-digestion. Il ne sert dès lors à rien de mettre un tel système en tête de la filière de traitement.

Par contre, l'admission de ces effluents bruts très concentrés dans le bassin de lagunage haut rendement en limite les performances par le fait que ces matières en suspension réduisent la diffusion de la lumière indispensable aux micro-algues pour produire l'oxygène nécessaire au fonctionnement.

Néanmoins, et dans les limites des performances possibles, les matières en suspension des effluents bruts anaérobies entrant dans le bassin changent de nature chimique et biologique : elles sont oxydées et transformées pour partie en micro-algues et flocs bactériens.

Ce changement de nature, s'il améliore peu la diffusion de la lumière, rend cependant les nouvelles matières en suspension à nouveau facilement décantables et dégradables par voie anaérobie.

Dans l'installation de la présente invention, la fosse septique 1 est placée en parallèle avec le bassin à haut rendement 2. Donc, les matières en suspension qui sont dans le bassin de lagunage haut rendement 2 sont décantées et digérées dans cette fosse septique 1 et le surnageant est rejeté dans le bassin de lagunage haut rendement 2 lui-même.

Le bassin de lagunage haut rendement 2 comprend au moins un moyen d'amélioration de la croissance algale 3. Un tel moyen se présente notamment sous la forme d'un moyen destiné à créer et à maintenir un certain courant dans le bassin de lagunage haut rendement 2. Dans une réalisation préférée de la présente invention, ce moyen pour créer et maintenir un certain courant dans le bassin de lagunage haut rendement est une roue à aube 3 ou équivalent.

L'installation de la présente invention comprend également, en amont du bassin de lagunage haut rendement 2, au moins un réservoir de stockage 5 destiné à recevoir les matières de vidange issues de camions hydrocureurs.

L'installation conforme à la présente invention comprend également, en aval la fosse septique de décantation-digestion, un lit de séchage 7.

A titre indicatif, le traitement des matières de vidange domestique à raison d'un m³ par jour nécessite :
- un bassin de lagunage haut rendement 2 d'une surface comprise entre 100 et 500 m² ;
- une fosse septique 1 de décantation-digestion (conforme au brevet FR-B-2 596 437 (EP-A-0 240 412)) d'un volume de 30 m³ ;
- un ou deux réservoirs de stockage 5 d'un volume de l'ordre de 30 m³ ; ce réservoir peut être muni d'un dispositif de brassage ;
- un lit de séchage d'une superficie de par exemple 50 m².

L'équipement électromécanique de l'installation conforme à la présente invention consiste en :
- une roue à aube 3 avec son moteur permettant d'obtenir une vitesse du courant d'eau dans le bassin de lagunage haut rendement 2 de l'ordre de 5 à 80 cm par seconde, toujours à raison d'un traitement de 1 m³ par jour de matières de vidange domestiques ;
- une pompe 6 dont est pourvu le réservoir de stockage 5 et qui est destiné à l'alimentation du bassin de lagunage haut rendement 2 ;
- une pompe de recirculation 4 pour la fosse septique de décantation-digestion située entre cette dernière et le bassin de lagunage haut rendement 2, une telle pompe permettant un débit de recirculation dans la fosse septique de décantation-digestion compris entre 0,5 à 15 m³, plus particulièrement 1 et 1,5 m³, de préférence 1,3 m³ par heure, toujours à raison d'un traitement de 1 m³ par jour de matières de vidange domestiques ;
- enfin, en aval du bassin de lagunage haut rendement 2, une pompe d'évacuation 8 de l'effluent traité vers une station d'épuration collective 9.

L'invention sera maintenant décrite au moyen d'un exemple de mise en oeuvre d'une installation conforme à la présente invention et pour laquelle les performances sont analysées au regard de la pollution éliminée et des rendements obtenus.

### I - MOYENS EXPERIMENTAUX

### 1.1 Installation expérimentale

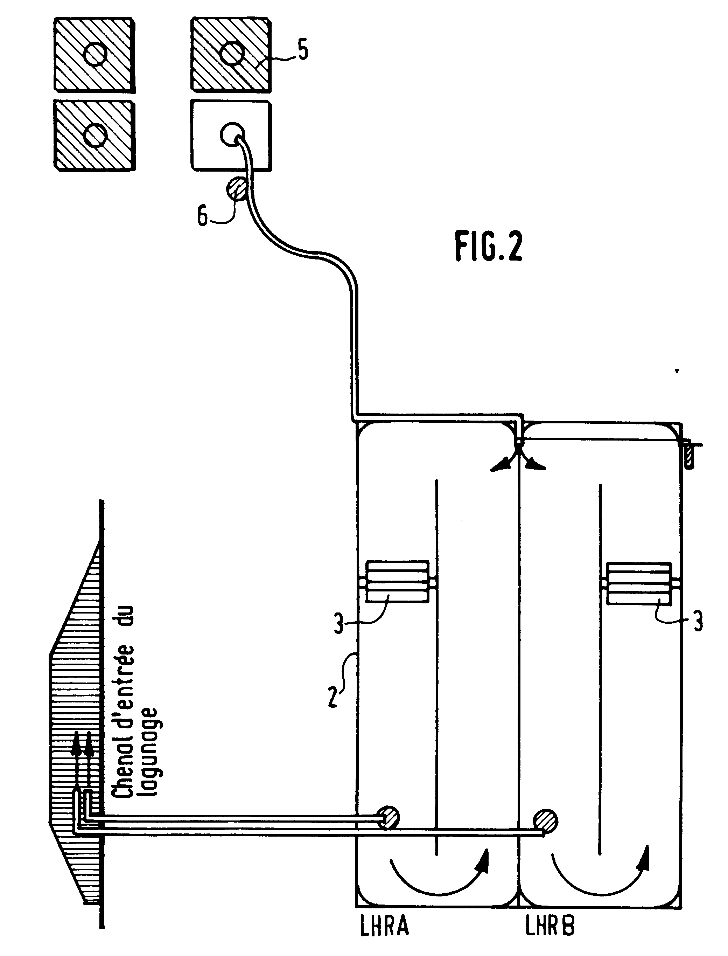

L'installation expérimentale est illustrée à la figure 2. Elle se compose, d'amont en aval, de quatre cuves de stockage (volume unitaire : 4 m³) destinées à recevoir les matières de vidange issues des camions hydrocureurs. Une des quatre cuves est munie d'une pompe péristaltique d'alimentation du système. Le traitement des matières brutes se fait dans deux bassins de lagunage dits "à haut-rendement" (nommés ci-après bassins A et B). Chaque bassin a une surface de 48 m² et une profondeur de 0,30 à 0,45 m. Un système de répartition de l'alimentation par bras oscillant permet de garantir un débit entrant équivalent dans les deux bassins. Dans chaque bassin une roue à aube (transmission à chaine) permet de créer et de maintenir un certain courant.

Un des bassins est prévu en tant que témoin (bassin B), l'autre (bassin A) pour être pourvu en parallèle d'un digesteur anaérobie, notamment du type de celui décrit dans le brevet FR-B- 2 596 437.

### 1.2 Déroulement de l'étude et fonctionnement de l'installation

Les mesures ont été effectuées pendant une période de quinze mois. Les cycles d'alimentation ont été fixés comme suit :

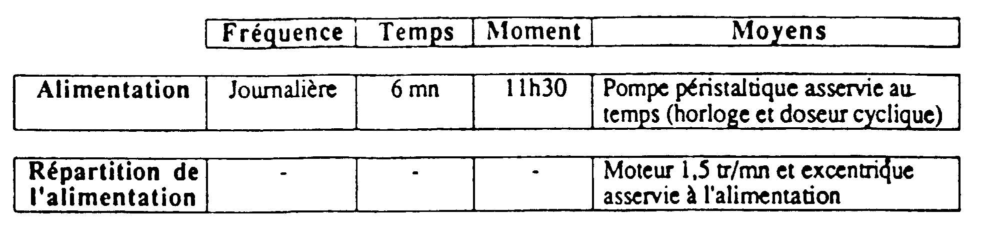

Le débit d'alimentation a été fixé à 100 litres de matières de vidange/j.bassin.

Sur le tableau 1 sont reportées les charges admises dans les bassins au cours d'une année d'expérimentation; Sont reportées également les charges organiques appliquées pour des eaux résiduaires urbaines dans un lagunage haut rendement (LHR) et dans un lagunage traditionnel.

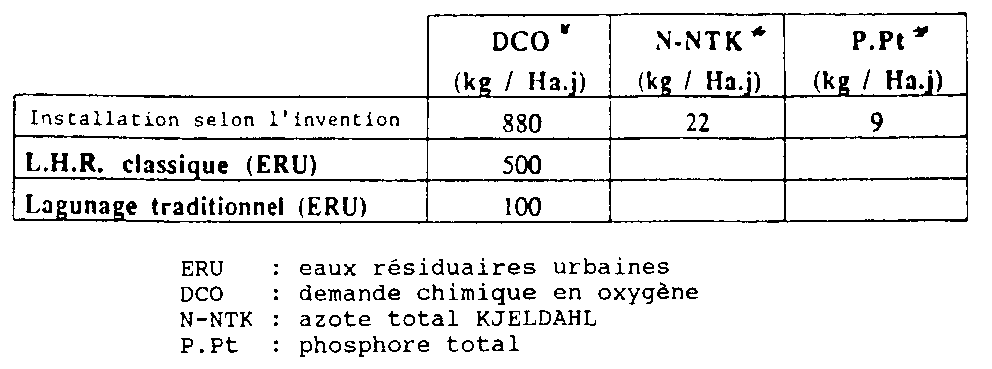

### Tableau 1 : Charges appliquées dans cette étude (matières de vidange) et dans d'autres systèmes (eaux résiduaires urbaines)

Les charges admissibles dans un LHR peuvent être modulées en fonction de la saison (le rapport peut être de 1 à 5 de l'hiver à l'été).

### 1.3 Analyses physico-chimiques et bactériologiques

Les prélèvements sont réalisés hebdomadairement (le mercredi à 11 h) à l'intérieur des bassins A et B. Le système étant infiniment mélangé, il n'y a pas lieu d'effectuer un prélèvement spécial en sortie.

Les performances du procédé sont appréhendées à travers les mesures suivantes :

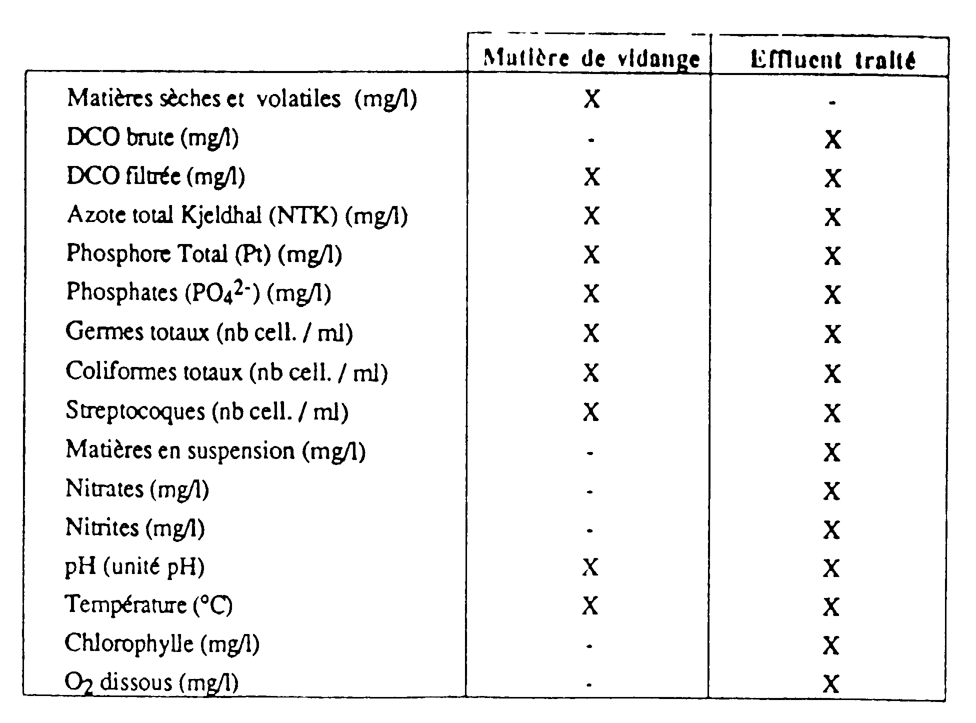

Toutes les analyses sont réalisées suivant les normes AFNOR. (DCO : demande chimique en oxygène).

### II - RESULTATS

Pour l'analyse des résultats, il faut tenir compte du fait suivant :

En cours d'exploitation et afin d'améliorer les performances du procédé, la vitesse de la roue à aube du bassin A a été augmentée (passage de 5 à 8 tours/minute au 207e jour) et une fosse de décantation-digestion de 3 m³ (décrit dans le brevet FR-A-2 596 437) a été adjointe en parallèle au bassin A (au 260e jour).

L'augmentation de la vitesse de la roue a permis d'éviter la sédimentation dans le bassin.

L'adjonction de la fosse a permis de déconcentrer en permanence le bassin en matières solides. Ces matières, composées entre autres des micro-algues, sont ainsi éliminées par méthanisation.

### 2.1 Caractéristiques des matières de vidange

Le tableau 2 présente les caractéristiques de matières de vidange (moyenne, minimum, maximum, nombre de prélèvements réalisés : n ).

On note tout d'abord que les valeurs sont, dans l'ensemble, assez dispersées autour de la moyenne. Cette hétérogénéité est une des caractéristiques des matières de vidange qui sont issues de systèmes souvent très divers. Quelques arrivages ont des caractéristiques proches d'eaux usées urbaines, d'autres de boues concentrées. Globalement, on remarque que les matières de vidanges sont des effluents très chargés. Le taux de matières sèches peut ainsi aller jusqu'à plus de 150 g/l, la DCO (soluble) jusqu'à 16 g/l et l'azote total jusqu'à plus de 3 g/l.

### 2.2 Evolution temporelle des paramètres caractéristiques de fonctionnement du système.

### 2.2.1 Température et pH

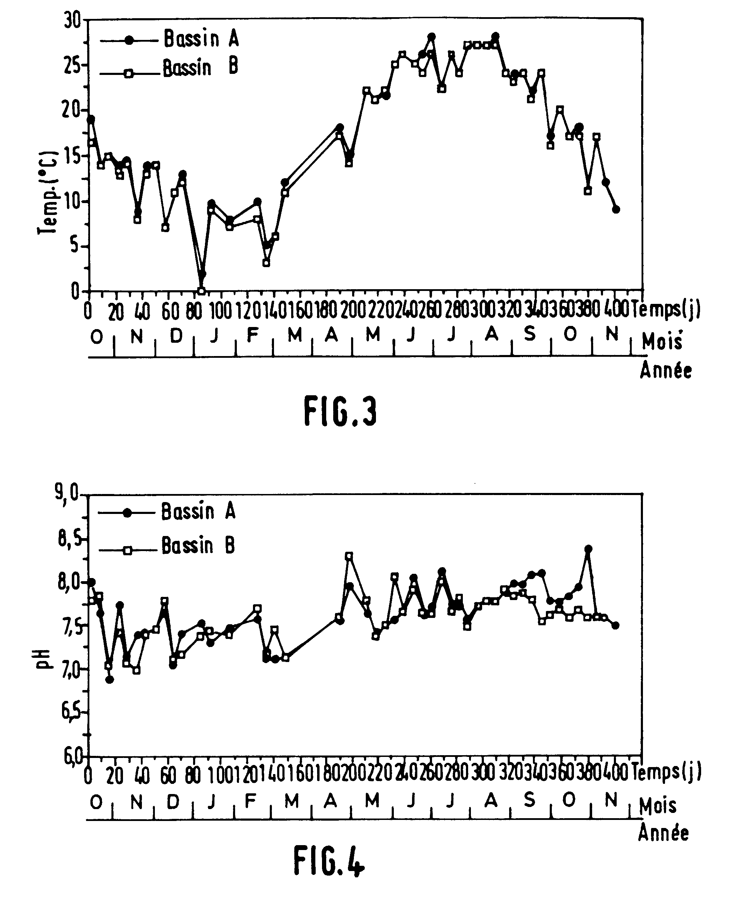

L'évolution de la température et du pH dans les bassins est présentée sur les figures 3 et 4.

Les températures oscillent entre 0°C (gel des bassins) et 28°C, la moyenne étant de 17°C. Le pH, à dominante basique varie entre 6,9 et 8,4, le lagunage constitue donc un excellent système tampon.

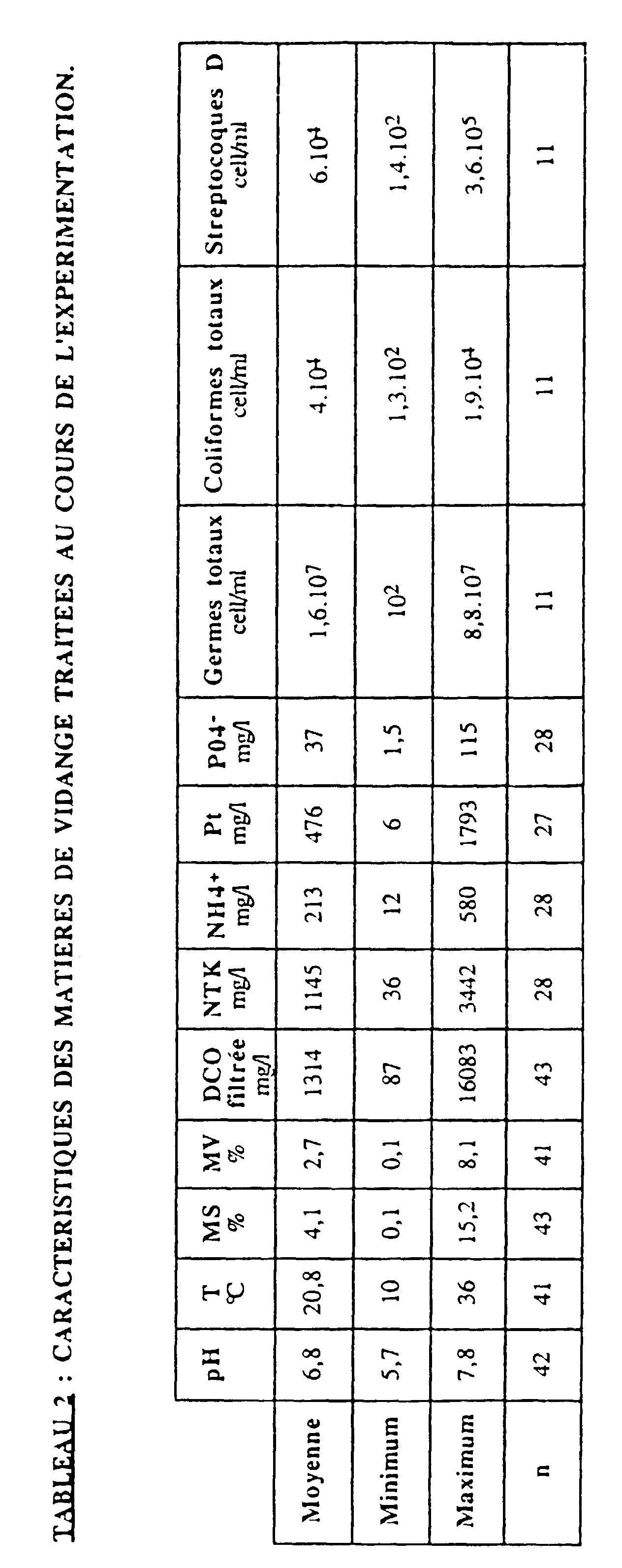

### 2.2.2 Oxygène dissous et chlorophylle

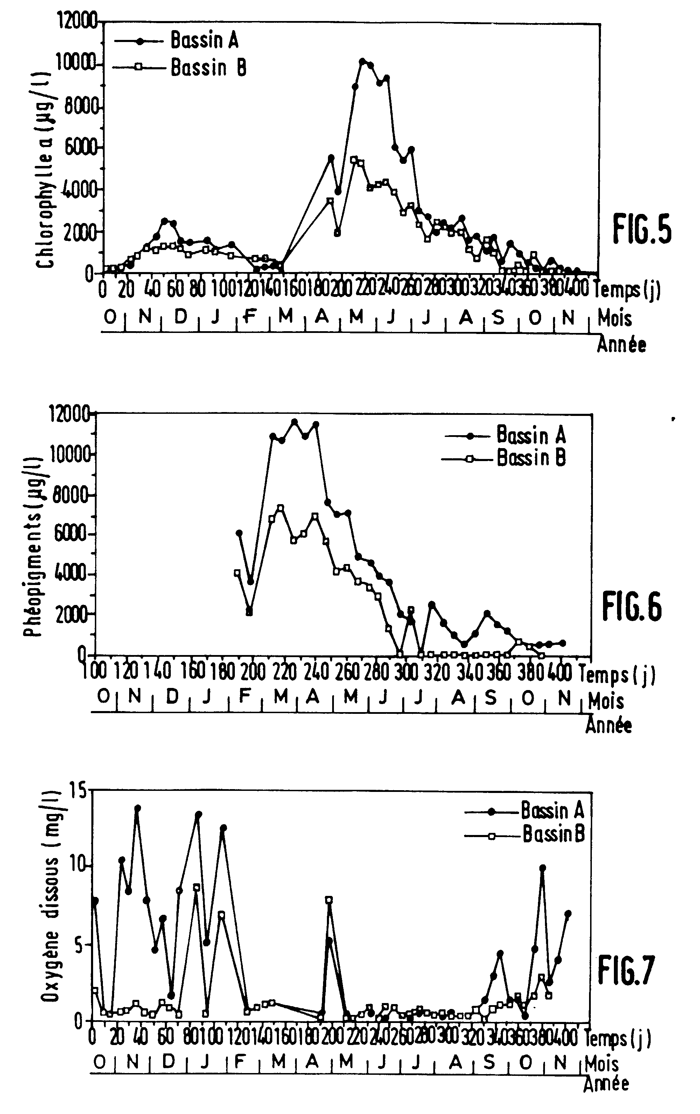

Les teneurs en chlorophylle a (fig.5) et phéopigments (fig. 6) situées de quelques µg/l à plus 10mg/l (bassin A) sont comparables à celles observées lors du traitement d'eau usées urbaines par lagunage haut rendement. Il y a donc réellement une épuration biologique réalisée par un complexe algues-bactéries, les premières fournissant l'oxygène nécessaire pour le développement des secondes. La teneur en O₂ dissous (fig. 7) est cependant relativement faible comparée aux traitements des eaux usées urbaines.

La différence marquée des teneurs en pigments entre les bassins A et B à partir du sixième mois et jusqu'à la fin du douzième mois peut être expliquée par une différence d'ombre portée sur la surface de l'eau, le bassin A est en effet plus ensoleillé.

### 2.2.3 DCO (demande chimique en oxygène) et MES (matières en suspension)

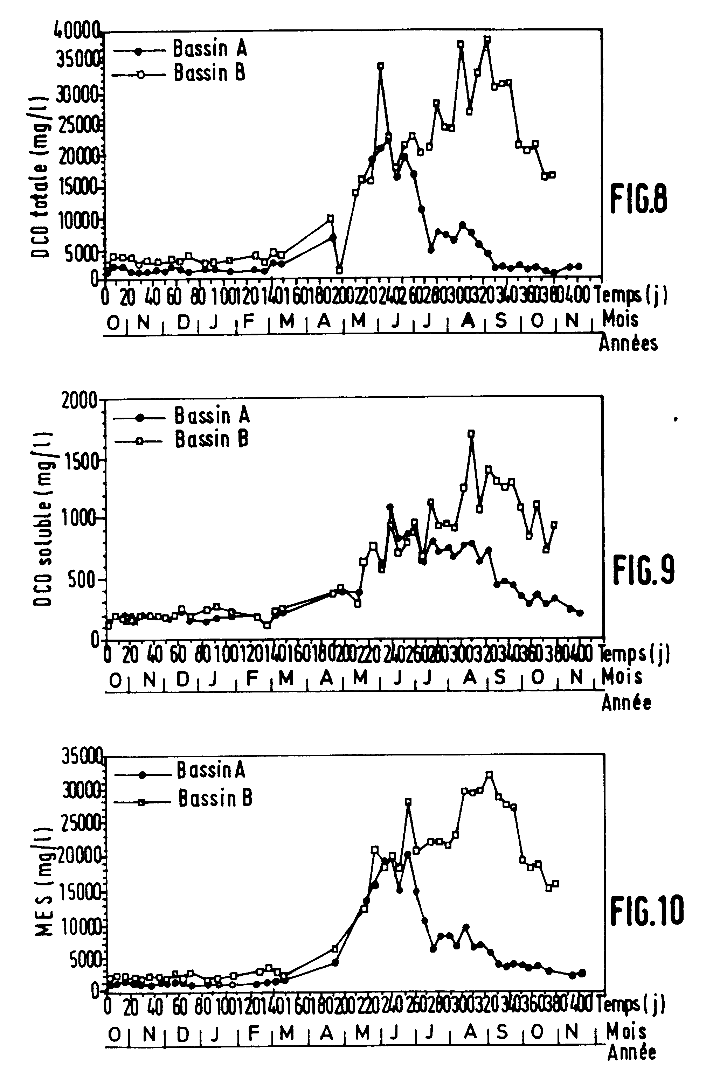

La DCO (totale et soluble) et les MES (fig. 8, 9, 10) suivent les mêmes évolutions. On observe une phase stable jusqu'à environ 200 jours de fonctionnement : les DCO totales n'excédent pas 5 g/l, les DCO solubles sont inférieures à 0,5 g/l et les MES sont inférieures à 4 g/l. Ensuite on observe une phase de forte croissance de toutes les valeurs qui débute à partir de l'augmentation de l'ensoleillement, de la température, mais aussi de l'augmentation de la vitesse de la roue à aube. Cette dernière entraîne une remise en suspension des sédiments, constitués à la fois d'algues et de matières brutes. Les prélèvements sont donc plus chargés. A partir du 260e jour environ l'influence de la fosse de décantation-digestion placée en parallèle au bassin A est très nette puisque l'on peut voir que les valeurs suivent des évolutions opposées dans les deux bassins : diminution des teneurs dans A et augmentation continue dans B (jusqu'à plus de 35 g/l de DCO totale, 1,5 g/l de DCO soluble et plus de 30 g/l de MES).

Dans le bassin A, la chute des teneurs en matières solides (et DCO brutes) montre l'efficacité du décanteur. La diminution de la DCO soluble montre qu'il y a également eu simultanément une digestion des matières retenues. Ce fait est confirmé par la production de méthane que l'on a pu observer dans la fosse (analyse en chromatographie phase gazeuse).

La fosse de digestion décantation a donc un rôle important pour le bon fonctionnement du système.

En fin d'expérimentaion, on constate que le procédé permet d'obtenir dans le bassin A des teneurs en DCO voisines de celles des eaux usées urbaines brutes, ce qui correspond à l'objectif fixé au départ.

### 2.2.4 Azote et phosphore

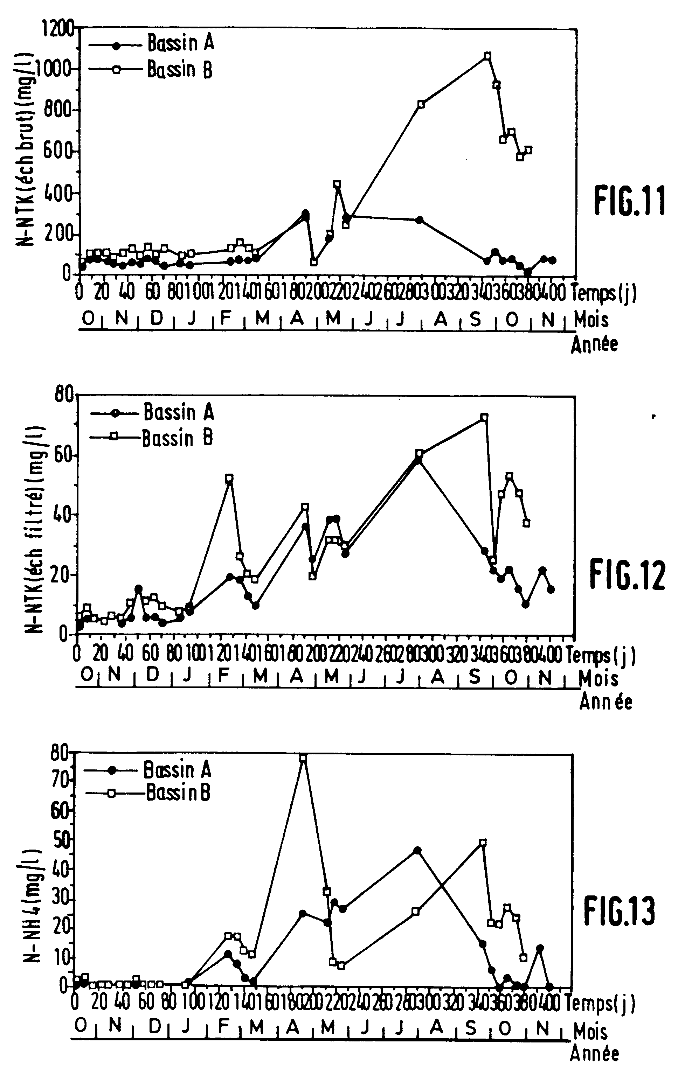

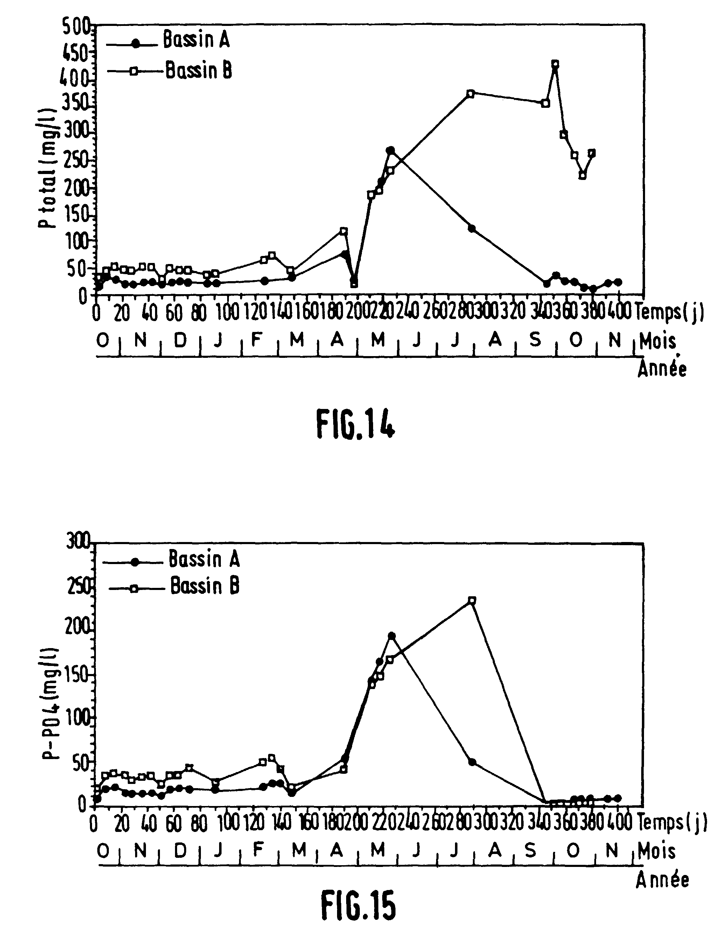

L'évolution des matières azotées et phosphorées présentée sur les figures 11, 12, 13, 14, 15, comparable à celle des autres paramètres (MES notamment), montre que l'azote et le phosphore se trouvent essentiellement sous forme particulaire.

Les bassins à haut rendement acceptent des teneurs élevées en azote total qui, sur échantillon filtré, est en effet voisin de 30 mg/l en moyenne (l'azote total sur l'échantillon brut représente essentiellement la biomasse algale).

### III - PERFORMANCES EPURATOIRES DE L'INSTALLATION

Le tableau 3 présente les performances du procédé calculées sur les moyennes des 70 derniers jours d'expérimentation (jours 341 à 411). La sortie du bassin A (bassin de référence avec fosse en parallèle) est comparée à l'entrée (matières de vidange brutes), au cours de la même période.

**Tableau 3 :**

| Performances épuratoires de l'installation selon l'invention | | | | | | | | | |
|---|---|---|---|---|---|---|---|---|---|
| | ENTREE (Matières brutes) | | | | SORTIE (Bassin A) | | | | Rendement |
| | moy. | min. | max. | n | moy. | min. | max. | n | |
| DCO brute (mg/l) | nd | nd | nd | - | 1245 | 480 | 1829 | 10 | >90 %* |
| DCO filtrée (mg/l) | 1698 | 87 | 6083 | 11 | 324 | 188 | 455 | 10 | 81 % |
| MES (mg/l) | 37945 | 100 | 152400 | 11 | 3190 | 2100 | 3900 | 9 | 92 % |
| N-NTK (mg/l) | 1317 | 54 | 3442 | 8 | 66 | 21 | 113 | 8 | 95 % |
| Pt (mg/l) | 579 | 6 | 1793 | 8 | 20 | 9 | 34 | 8 | 97 % |

| | | | | | | | | | |
|---|---|---|---|---|---|---|---|---|---|
| nd = non déterminé * estimation à l'aide de la teneur moyenne en MS des matières brutes. | | | | | | | | | |

Le tableau 4 présente les charges bactériennes relevées pendant les 240 premiers jours de fonctionnement du système (les analyses ont été arrêtées ensuite).

**Tableau 4 :**

| Performances épuratoires de l'installation selon l'invention (paramètres bactériologiques) | | | | | | | | | |
|---|---|---|---|---|---|---|---|---|---|
| | ENTREE (Matières brutes) | | | | SORTIE (Bassin A) | | | | Abattement |
| | moy. | min. | max. | n | moy. | min. | max. | n | |
| Germes totaux (nb cellules / ml) | 1,6.10⁷ | 100 | 8,8.10⁷ | 11 | 9,8.10⁷ | 6,8.10⁵ | 1,7.10⁹ | 22 | 0 |
| Coliformes totaux (nb cellules / ml) | 4.10⁴ | 135 | 2.10⁵ | 11 | 2.10⁶ | 55 | 2,5.10⁷ | 22 | 0 |
| Streptocoques fécaux (nb cellules / ml) | 6.10⁴ | 140 | 3,6.10⁵ | 11 | 7,6.10³ | 5 | 8.10⁴ | 22 | 1 log |

Au vu de ces résultats, on peut conclure que le procédé n'a pas d'effet significatif sur la réduction du nombre de germes tests.

L'efficacité de la fosse de décantation-digestion montée en parallèle sur le bassin A est montrée par les résultats suivants (sur les 42 derniers jours de fonctionnement, tableau 5).

**Tableau 5 :**

| Efficacité de la fosse de décantation-digestion | | | | | | | | | |
|---|---|---|---|---|---|---|---|---|---|
| | ENTREE FOSSE (=sortie bassin A) | | | | SORTIE FOSSE | | | | Rendement |
| | moy. | min. | max. | n | moy. | min. | max. | n | |
| DCO brute (mg/l) | 1100 | 480 | 1509 | 6 | 516 | 323 | 659 | 5 | 53 % |
| DCO filtrée (mg/l) | 270 | 188 | 347 | 6 | 280 | 201 | 357 | 5 | -4 % |
| MES (mg/l) | 2720 | 2100 | 3500 | 6 | 281 | 126 | 440 | 5 | 90 % |

La fosse permet donc de diminuer considérablement la charge en solide et en matières organiques au sein du bassin à haut rendement. Par ailleurs, la digestion des solides organiques mise en évidence par l'augmentation de la DCO soluble permet d'accélérer le processus général de biodégradation (les produits solubles sont plus facilement assimilables). La mise en parallèle de cette fosse est donc indispensable au bon fonctionnement de l'installation.

Le tableau 6 permet de montrer l'efficacité de la fosse septique de décantation-digestion par comparaison des effluents de sortie des bassins A (avec fosse) et B (sans fosse) à partir de la mise en service de la fosse (jour 260 à 411).

**Tableau 6 :**

| Influence de la fosse sur le fonctionnement de l'installation | | | | | | | | | |
|---|---|---|---|---|---|---|---|---|---|
| | BASSIN A | | | | BASSIN B | | | | Efficacité % (*) |
| | moy. | min. | max. | n | moy. | min. | max. | n | |
| MES (mg/l) | 6530 | 2100 | 20100 | 20 | 25210 | 15200 | 49700 | 19 | 87 |
| DCO brute (mg/l) | 5082 | 480 | 19140 | 21 | 25495 | 16563 | 37951 | 19 | 87 |
| DCO filtrée (mg/l) | 540 | 188 | 876 | 21 | 1056 | 666 | 1682 | 19 | 68 |

| | | | | | | | | | |
|---|---|---|---|---|---|---|---|---|---|
| (*) Efficacité du bassin A par rapport au bassin B calculée sur les moyennes. | | | | | | | | | |

De tout ce qui précède, il ressort que l'installation conforme à l'invention permet de traiter les matières de vidange domestiques par voie biologique.

Il y a donc une élimination et non transfert de la pollution. Les MES dans l'effluent de sortie étant essentiellement de la biomasse algale, les taux d'épuration obtenus permettent un rejet tout à fait compatible avec un traitement en station d'épuration collective classique.

De plus, l'installation conforme à l'invention fonctionne sans prétraitement, sans ajout de réactifs, sans aération artificielle.

Les boues produites sont essentiellement algales et sont méthanisées dans la fosse. Lors de leur éventuelle extraction, elles seront donc fortement minéralisées (stabilisées).

Les débits d'alimentation sont tels qu'ils sont, dans notre région et pendant la plus grade partie de l'année, compensés par l'évaporation, il n'y a donc pratiquement aucun rejet pendant les périodes estivales.

Seuls deux moteurs fonctionnent en continu (roue à aube et pompe de recirculation), limitant les causes de panne.

Lors de l'étude, les consommations suivantes ont été relevées (tableau 7).

**Tableau 7 :**

| Consommation énergétique de l'installation conforme à l'invention | | |
|---|---|---|
| Appareil | Temps de fonctionnement journalier | Puissance horaire consommée |
| 1 moteur roue à aube | 24 H | 1,8 KW |
| 1 pompe de recirculation | 24 H | 0,25 KW |
| 1 pompe alimentation | 10 mn | 0,55 KW |
| 1 pompe de vidange | - | 1,8 KW |

Le procédé semi-extensif décrit ci-dessus apporte une solution technique au problème du traitement des matières de vidange domestiques. Les performances épuratoires rendent l'effluent assimilable à un effluent urbain.

L'installation conforme à l'invention convient tout à fait si elle est réalisée sous forme de multiples stations de proximité mises à disposition des vidangeurs couplées avec les stations d'épuration existantes des petites et moyennes communes.

L'impact sur ces stations est nul si les rejets se font en périodes creuses de fonctionnement (la nuit par exemple).

## Revendications

1. Installation de traitement des matières de vidange domestiques par voie biologique, caractérisée en ce qu'elle comprend :
- au moins une fosse septique (1) de décantation-digestion destinée à éliminer la majeure partie des matières solides, la fosse septique (1) ayant un volume de 30 m³ pour un traitement de 1 m³/jour de matières de vidange domestiques ;
- au moins un bassin de lagunage haut rendement (2) ; les dits fosse septique (1) et bassin de lagunage haut rendement (2) étant en parallèle de manière à ce que les matières brutes en suspension dans le bassin de lagunage haut rendement soient décantées et digérées dans la fosse septique et que le surnageant de la fosse septique soit rejeté dans le bassin de lagunage, la surface au bassin de lagunage naut rendement (2) étant comprise entre 100 et 500 m² pour un traitement de 1 m³/jour de matières de vidange domestiques.

2. Installation selon la revendication 1, caractérisée en ce que le bassin de lagunage haut rendement (2) comprend au moins un moyen d'amélioration de la croissance algale (3).

3. Installation selon la revendication 1 ou 2, caractérisée en ce que le moyen d'amélioration de la croissance algale (3) comprend un moyen pour créer et maintenir un certain courant dans le bassin de lagunage haut rendement.

4. Installation selon l'une quelconque des revendications 1 à 3, caractérisée en ce que le moyen pour créer et maintenir un certain courant dans le bassin de lagunage haut rendement comprend une roue à aube (3) ou équivalents.

5. Installation selon l'une quelconque des revendications 1 à 4, en ce que la vitesse du courant d'eau dans le bassin de lagunage haut rendement (2) est de l'ordre de 5 à 80 cm/s pour un traitement de 1 m³/jour de matière de vidange domestiques.

6. Installation selon l'une quelconque des revendications 1 à 5, caractérisée en ce qu'elle comprend une pompe de recirculation (4) pour la fosse septique de décantation-digestion (1) située entre cette dernière et le bassin de lagunage haut rendement (2).

7. Installation selon la revendication 6, caractérisée en ce que le débit de recirculation dans la fosse septique de décantation-digestion (1) est compris entre 0,5 et 15 m³/h de préférence 1,3 m³/h pour un traitement de 1 m³/jour de matières de vidange domestiques.

8. Installation selon l'une quelconque des revendications 1 à 7, caractérisée en ce qu'elle comprend, en amont du bassin de lagunage haut rendement (2), au moins un réservoir de stockage (5) destiné à recevoir les matières de vidange domestiques issues de camions hydrocureurs.

9. Installation selon la revendication 8, caractérisée en ce que le réservoir de stockage (5) est muni d'un dispositif de brassage.

10. Installation selon la revendication 8 ou 9, caractérisée en ce que le volume du réservoir de stockage (5) est de l'ordre de 30 m³ pour un traitement de 1 m³/jour de matières de vidange domestiques.

11. Installation selon l'une quelconque des revendications 1 à 10, caractérisée en ce que le réservoir de stockage (5) est muni d'une pompe (6) destinée à l'alimentation du bassin de lagunage haut rendement (2).

12. Installation selon l'une quelconque des revendications 1 à 11, caractérisée en ce qu' elle comprend en outre, en aval de la fosse septique de décantation-digestion (1), un lit de séchage (7).

13. Installation selon l'une quelconque des revendications 1 à 12, caractérisée en ce qu'elle comprend, en aval du bassin de lagunage haut rendement (2), une pompe d'évacuation (8) de l'effluent traité vers une station d'épuration collective (9).

14. Utilisation d'une installation selon l'une quelconque des revendications 1 à 13 pour le traitement des matières de vidange domestiques.

## Claims

1. AN installation for treating domestic waste materials biologically, characterised in that it comprises:
- at least one settling/digestion septic tank (1) intended to eliminate the major part of the solid materials, the septic tank (1) having a volume of 30 m³ for a processing of domestic waste materials of 1 m³/day;
- at least one high-efficiency lagooning tank (2); the said septic tank (1) and high-efficiency lagooning tank (2) being in parallel so that the untreated materials in suspension in the high-efficiency lagooning tank are settled and digested in the septic tank and so that the supernatant in the septic tank is discharged into the lagooning tank, the surface area of the high-efficiency lagooning tank (2) being between 100 and 500 m² for a treatment of domestic waste materials of 1 m³/day.

2. An installation according to Claim 1, characterised in that the high-efficiency lagooning basin (2) comprises at least one means of improving the algal growth (3).

3. An installation according to Claim 1 or 2, characterised in that the means of improving the algal growth (3) comprises a means of creating and maintaining a certain current in the high-efficiency lagooning tank.

4. An installation according to any one of Claims 1 to 3, characterised in that the means for creating and maintaining a certain current in the high-efficiency lagooning tank comprises a bladed wheel (3) or equivalent.

5. An installation according to any one of Claims 1 to 4, characterised in that the speed of the water current in the high-efficiency lagooning tank (2) is around 5 to 80 cm/sec for a treatment of domestic waste material of 1 m³/day.

6. An installation according to any one of Claims 1 to 5, characterised in that it comprises a recirculation pump (4) for the settling/digestion septic tank (1) situated between the latter and the high-efficiency lagooning tank (2).

7. An installation according to Claim 6, characterised in that the recirculation rate in the settling/digestion septic tank (1) is between 0.5 and 15 m³/hr, and preferably 1.3 m³/hr for a treatment of domestic waste materials of 1 m³/day.

8. An installation according to any one of Claims 1 to 7, characterised in that it comprises, upstream from the high-efficiency lagooning tank (2), at least one storage reservoir (5) intended to receive the domestic waste materials issuing from water-jetting lorries.

9. An installation according to Claim 8, characterised in that the storage reservoir (5) is provided with a stirring device.

10. An installation according to Claim 8 or 9, characterised in that the volume of the storage reservoir (5) is around 33 m³ for a treatment of domestic waste materials of 1 m³/day.

11. An installation according to any one of Claims 1 to 10, characterised in that the storage reservoir (5) is provided with a pump (6) intended for feeding the high-efficiency lagooning tank (2).

12. An installation according to any one of Claims 1 to 11, characterised in that it also comprises, downstream from the settling/digestion septic tank (1), a drying bed (7).

13. An installation according to any one of Claims 1 to 12, characterised in that it comprises, downstream from the high-efficiency lagooning tank (2), a pump (8) for discharging the treated effluent to a collective purification plant (9).

14. The use of an installation according to any one of Claims 1 to 13 for treating domestic waste materials.

## Patentansprüche

1. Aufbereitungsanlage von Haushaltsschmutzstoffen auf biologischem Wege, dadurch gekennzeichnet, dass sie umfasst :
- mindestens eine Klärgrube (1) zur Beseitigung des grössten Teils der Feststoffe, wobei die Klärgrube (1) ein Fassungsvermögen von 30 m² aufweist für eine Aufbereitung von 1m³/Tag Haushaltsschmutzstoffen ;
- mindestens ein Hochleistungs-Kollektorbecken (2) ; wobei die besagte Klärgrube (1) und das besagte Hochleistungs-Kollektorbecken (2) parallel zueinander angeordnet sind, so dass die sich im Hochleistungs-Kollektorbecken (2) in Suspension befindlichen Rohstoffe in der Klärgrube geklärt und zersetzt werden, und dass die an der Oberfläche der Klärgrube schwimmenden Stoffe in das Kollektorbecken zurückgeführt werden, wobei die Oberfläche des Hochleistungs-Kollektorbeckens (2) zwischen 100 und 500 m² gross ist für eine Aufbereitung von 1m³/Tag Haushaltsschmutzstoffen.

2. Anlage nach Anspruch 1, dadurch gekennzeichnet, dass das Hochleistungs-Kollektorbecken (2) mindestens ein Verbesserungsmittel (3) des Algenwachstums umfasst.

3. Anlage nach Anspruch 1 oder 2, dadurch gekennzeichnet, dass das Verbesserungsmittel (3) des Algenwachstums ein Mittel umfasst, um im Hochleistungs-Kollektorbecken einen bestimmten Strom herzustellen und aufrechtzuerhalten.

4. Anlage nach einem der Ansprüche 1 bis 3, dadurch gekennzeichnet, dass das Mittel zur Herstellung und Aufrechterhaltung eines bestimmten Stromes im Hochleistungs-Kollektorbecken ein Schaufelrad (3) o.ä. umfasst.

5. Anlage nach einem der Ansprüche 1 bis 4, dadurch gekennzeichnet, dass die Geschwindigkeit des Wasserstromes im Hochleistungs-Kollektorbecken (2) etwa 5 bis 80 cm/s für eine Aufbereitung von 1m³/Tag Haushaltsschmutzstoffen beträgt.

6. Anlage nach einem der Ansprüche 1 is 5, dadurch gekennzeichnet, dass sie eine Umwälzpumpe (4) für die Klärgrube (1) umfasst, die zwischen dieser Grube und dem Hochleistungs-Kollektorbecken (2) angeordnet ist.

7. Anlage nach Anspruch 6, dadurch gekennzeichnet, dass die Umwälzmenge in der Klärgrube (1) zwischen 0,5 und 15m³/h und vorzugsweise 1,3m³/h für eine Aufbereitung von 1m³/Tag Haushaltsschmutzstoffen beträgt.

8. Anlage nach einem der Ansprüche 1 bis 7, dadurch gekennzeichnet, dass sie dem Hochleistungs-Kollektorbecken (2) vorgelagert mindestens ein Lagerbecken (5) für die Aufnahme der Haushaltsschmutzstoffe umfasst, die mit Wasserklärfahrzeugen antransportiert werden.

9. Anlage nach Anspruch 8, dadurch gekennzeichnet, dass das Lagerbecken (5) mit einer Rührvorrichtung ausgerüstet ist.

10. Anlage nach Anspruch 8 oder 9, dadurch gekennzeichnet, dass das Fassungsvermögen des Lagerbeckens (5) etwa 30 m³ für eine Aufbereitung von 1m³/Tag Haushaltsschmutzstoffen beträgt.

11. Anlage nach einem der Ansprüche 1 bis 10, dadurch gekennzeichnet, dass das Lagerbecken (5) mit einer Pumpe (6) zur Versorgung des Hochleistungs-Kollektorbeckens (2) ausgerüstet ist.

12. Anlage nach einem der Ansprüche 1 bis 11, dadurch gekennzeichnet, dass sie weiters, der Klärgrube (1) nachgelagert, ein Trockenbett (7) umfasst.

13. Anlage nach einem der Ansprüche 1 bis 12, dadurch gekennzeichnet, dass sie dem Hochleistungs-Kollektorbecken (2) nachgelagert eine Pumpe (8) für die Entsorgung des aufbereiteten Schadstoffes zu einer kollektiven Reinigungsstation (9) umfasst.

14. Verwendung einer Anlage nach einem der Ansprüche 1 bis 13 für die Aufbereitung von Haushaltsschmutzstoffen.
